# EUROPÄISCHE PATENTSCHRIFT

(11) **EP 1 722 454 B1**
(45) Veröffentlichungstag und Bekanntmachung des Hinweises auf die Patenterteilung: **14.09.2011**
(21) Anmeldenummer: 06005543.1
(22) Anmeldetag: 17.03.2006
(51) Int. Cl.: H02G 3/30, F16L 3/223

(54) **Befestigungsvorrichtung für ein Kabel**
Fastening device for cable
Dispositif d'attache de cable

(30) Priorität: 11.05.2005 DE 202005007476 U
(43) Veröffentlichungstag der Anmeldung: 15.11.2006
(73) Patentinhaber: TRW Automotive Electronics & Components GmbH, 78315 Radolfzell (DE)
(72) Erfinder: Klein, Jean-Luc, 67350 Ringendorf (FR)
(74) Vertreter: Prinz & Partner

(56) Entgegenhaltungen:
- EP-A1- 1 286 094
- DE-U1- 29 510 148
- DE-U1- 29 908 704
- DE-U1-202006 010 110
- US-A- 5 012 995
- US-A- 5 806 812

## Beschreibung

Die Erfindung betrifft eine Befestigungsvorrichtung für ein Kabel.

Zur Befestigung von Kabel und Leitungen wie Hydraulikleitungen und elektrischen Leitungen in Fahrzeugen insbesondere an einer Fahrzeugkarosserie sind unterschiedliche Befestigungsvorrichtungen bekannt. Ein Kabel kann z.B. an einer Schiene angebracht werden, wobei die Schiene einen anschließenden Klammerabschnitt aufweist, der an einer Kante der Fahrzeugkarosserie angebracht, insbesondere angeklipst wird. Auch sind beispielsweise aus der EP 1 286 094 A1, der US 5,012,995 A, der US 5,806,812 A und der DE 295 10 148 U1 zweiteilige Kabelbefestigungen bekannt, die aus einer Schiene und einem Fußteil bestehen, wobei das Fußteil in vorgesehene Löcher einrasten und dort fixiert werden kann. Die zweiteiligen Befestigungsvorrichtungen müssen jedoch zusammengebaut werden.

Die Aufgabe der Erfindung besteht darin, eine Befestigungsvorrichtung für Kabel bereitzustellen, die kostengünstig ist und eine Befestigung am Fahrzeug erleichtert.

Zu diesem Zweck sieht die Erfindung eine Befestigungsvorrichtung für ein Kabel vor, mit einer Schiene, die eine Aussparung aufweist, und einem Befestigungsabschnitt, der sich durch die Aussparung erstreckt und beweglich, aber unverlierbar in dieser angeordnet ist, wobei sowohl die Schiene als auch der Befestigungsabschnitt einstückig ausgebildet sind. Die Befestigungsvorrichtung ist so im 1-Zyklus-Spritzgußverfahren hergestellt, daß das erste Element zwar in dem zweiten Element beweglich ist, jedoch unlösbar, d.h. unverlierbar, mit diesem verbunden.

Ein Kabel kann an der Schiene z.B. mit einem um das Kabel gewickelten Kabelbinder befestigt werden. Nach dem Anbringen des Kabels an der Schiene wird die Befestigungsvorrichtung an der Fahrzeugkarosserie befestigt. Eine zur bereits fixierten Befestigungsvorrichtung benachbarte Befestigungsvorrichtung kann nachträglich auf Grund der Beweglichkeit der Schiene relativ zum Befestigungsabschnitt justiert werden, wodurch die Montage an der Fahrzeugkarosserie erleichtert wird. Zudem ist die Befestigungsvorrichtung einteilig ausgebildet, so daß ein zeitaufwendiger Zusammenbau entfällt. Bei der Herstellung im 1-Zyklusverfahren wird die aus zwei Elementen bestehende Befestigungsvorrichtung in einer Form gleichzeitig gespritzt, wobei entsprechend ausgebildete Schieber eingeführt werden, die einen Spalt zwischen den beiden Elementen erlauben, so daß das erste Element zwar in dem zweiten Element beweglich ist, jedoch unlösbar, d.h. unverlierbar, mit diesem verbunden. Dabei ergibt sich der wesentliche Vorteil, daß das zweite Element nicht am ersten montiert werden muß und trotzdem eine Beweglichkeit der beiden Teile untereinander gewährleistet ist.

Bevorzugt ist die Schiene rinnenförmig ausgebildet. In der Schiene verläuft das Kabel, das beispielsweise mit einem Kabelbinder oder einer an der Schiene angebrachten Kabelschelle an der Schiene befestigt wird.

Vorzugsweise sind Vorsprünge in der Aussparung vorgesehen, wobei jeweils zwei Vorsprünge gegenüberliegend angeordnet sind. Da der Befestigungsabschnitt beweglich in der Aussparung der Schiene angeordnet ist, gewährleisten diese Vorsprünge, daß der Befestigungsabschnitt in der jeweiligen Stellung gehalten wird. Gleichzeitig stehen die Vorsprünge nicht weit in die Aussparung vor, so daß ein Verschieben des Befestigungsabschnitts möglich ist, wobei die Vorsprünge durch Verformen überglitten werden.

Der Befestigungsabschnitt kann einen Federteller aufweisen. Der Federteller dient dabei zum Höhenausgleich bei der Montage der Befestigungsvorrichtung an der Fahrzeugkarosserie und gleichzeitig zur Abdichtung der in der Fahrzeugkarosserie vorhandenen Öffnung, da der Federteller diese im eingebauten Zustand abdeckt.

Weitere Merkmale und Vorteile ergeben sich aus den Unteransprüchen. Die Erfindung wird nachfolgend anhand einer bevorzugten Ausführungsform beschrieben, die in den Zeichnungen dargestellt ist. In den Zeichnungen zeigen:
- Figur 1 eine perspektivische Ansicht der erfindungsgemäßen Befestigungsvorrichtung für ein Kabel,
- Figur 2 eine perspektivische Ansicht der Befestigungsvorrichtung,
- Figur 3 eine Seitenansicht der Befestigungsvorrichtung,
- Figur 4 eine Ansicht der Befestigungsvorrichtung, und

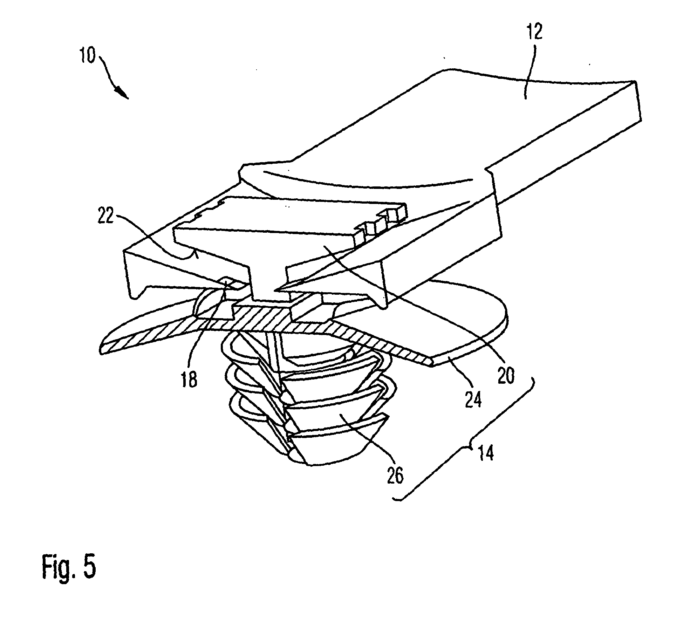

- Figur 5 eine Schnittansicht der Befestigungsvorrichtung entlang der Linie V-V in Fig. 1.

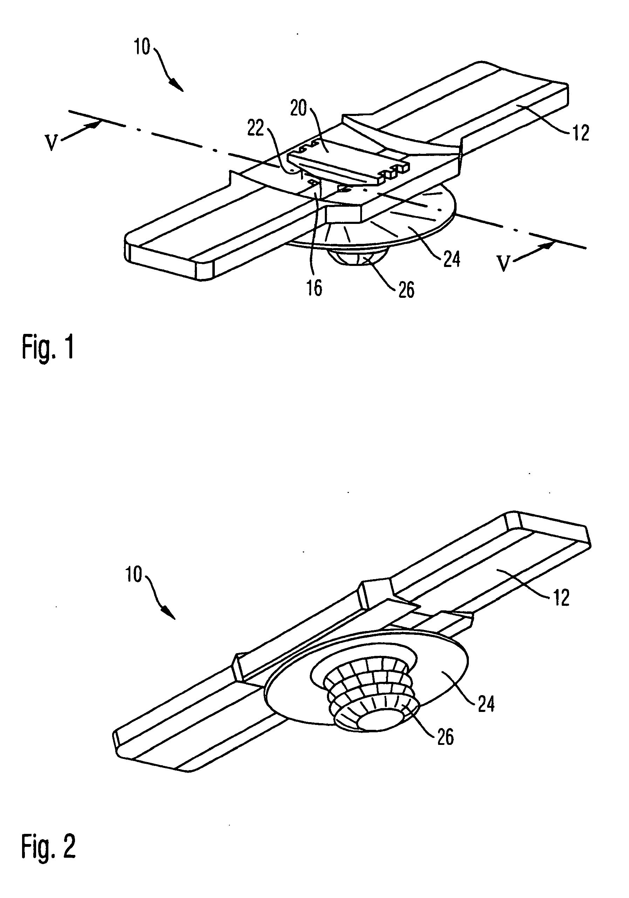

In Figur 1 ist eine Befestigungsvorrichtung 10 für ein Kabel 11 gezeigt, bestehend aus einer einstückigen, rinnenförmigen Schiene 12 und einem einstückigen Befestigungsabschnitt 14.

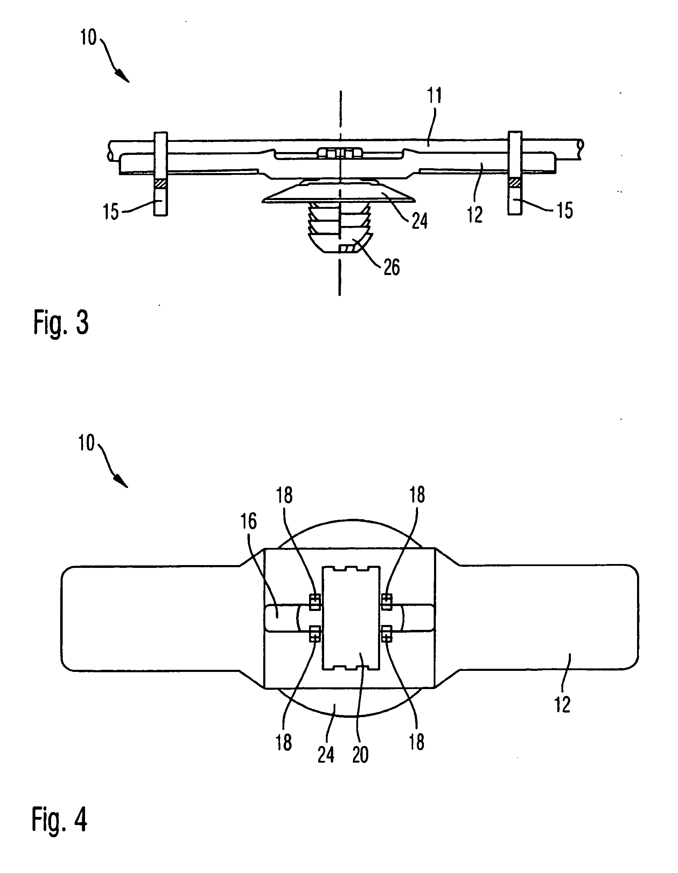

Die rinnenförmige Schiene 12 kann ein Kabel 11 aufnehmen (Figur 3), wobei das Kabel 11 entweder mit einem um die Schiene 12 gewickelten Kabelbinder 15 (schematisch gezeigt) oder mit einer an der Schiene 12 angeordneten, nicht gezeigten Kabelschelle an der Schiene 12 befestigt wird.

Der mittlere Bereich der Schiene 12 weist einer längliche Aussparung 16 auf, die höhenversetzt zum übrigen Bereich der Schiene 12 angeordnet ist.

In der Aussparung 16 sind vier Vorsprünge 18 ausgebildet, wobei jeweils zwei Vorsprünge 18 gegenüberliegend angeordnet sind und die Vorsprünge 18 über angrenzende Kanten der Aussparung 16 vorstehen. Durch die Vorsprünge 16 und die umlaufenden Kanten der Aussparung 16 sind drei gleich große Abschnitte gebildet. Durch einen dieser Abschnitte erstreckt sich ein Ende 20 des Befestigungsabschnitts 14.

Das Ende 20 des Befestigungsabschnitts 14 ist T-förmig ausgebildet, wobei sich der schmalere Abschnitt durch die Aussparung 16 erstreckt. Berührflächen 22 sind vorgesehen, die dieselbe Neigung wie der höhenversetzte Abschnitt der Schiene 12 aufweisen, so daß die Berührflächen 22 an der Schiene 12 anliegen. Das Ende 20 des Befestigungsabschnitts 14 steht dabei nicht über die rinnenförmige Schiene 12 vor.

In Figur 4 ist der Befestigungsabschnitt 14 in einer Mittelstellung gezeigt, in der es sich zwischen den nebeneinanderliegenden Vorsprüngen 18 befmdet und von den Vorsprüngen 18 in dieser Stellung gehalten wird.

Der Befestigungsabschnitt 14 kann sich auch in einer Randstellung befinden, in der er von den angrenzenden, gegenüberliegenden Vorsprüngen 18 und den Kanten der Aussparung 16 gehalten wird, worauf im folgenden eingegangen wird.

Der Befestigungsabschnitt 14 weist einen Federteller 24 auf, der an der von der Schiene 12 abgewandten Seite angeordnet ist. Der Federteller 24 kann bei der Montage an der Fahrzeugkarosserie einen Höhenausgleich gewährleisten.

Der Befestigungsabschnitt 14 weist ein Ende 26 auf, das der Befestigung an der Fahrzeugkarosserie dient. Das Ende 26 ist als tannenzapfenförmiges Profil ausgebildet, das in eine Öffnung (nicht gezeigt) in der Fahrzeugkarosserie eingreifen kann, die dementsprechend ausgebildet ist. Das tannenzapfenförmige Profil ist dadurch gebildet, daß sechs übereinandergestapelte tellerartige Teile angeordnet sind, bei denen jeweils zwei gegenüberliegende Abschnitte fehlen und die jeweiligen bestehenden Abschnitte des jeweils darunter bzw. darüberliegenden Tellers zueinander versetzt angeordnet sind.

Der Befestigungsabschnitt 14 und die Schiene 12 sind im 1-Zyklus-Spritzgußverfahren hergestellt, wobei entsprechend ausgebildete Schieber (nicht gezeigt) eingeführt werden, um zu ermöglichen, daß die Schiene 12 und der Befestigungsabschnitt 14 zueinander beweglich sind, sie jedoch unverlierbar miteinander verbunden sind.

Bei der Befestigung eines Kabels 11 an der Fahrzeugkarosserie wird das Kabel 11 in die rinnenförmige Schiene 12 gelegt und an dieser mittels des Kabelbinders 15 befestigt. Das tannenzapfenförmige Ende 26 wird in eine nicht gezeigte, dementsprechend ausgebildete Öffnung in der Fahrzeugkarosserie gedrückt, so daß die Befestigungsvorrichtung 10 darin fixiert ist. Der Federteller 24 wird dabei gegen die Fahrzeugkarosserie gedrückt und kann aufgrund seiner federnden Eigenschaften einen Höhenausgleich herstellen. Da der Federteller 24 ferner um die Öffnung in der Fahrzeugkarosserie anliegt, dichtet er diese ab.

Beim Einbau der Befestigungsvorrichtung 10 an der Fahrzeugkarosserie liegt das T-förmige Ende 20 des Befestigungsabschnitts 14 in der Mittelstellung 16 zwischen den benachbarten Vorsprüngen 18. Nach dem Anbringen der Befestigungsvorrichtung 10 wird eine benachbarte Befestigungsvorrichtung 10, die gleich ausgebildet ist, an der Fahrzeugkarosserie befestigt. Dabei kann die Schiene 12 aufgrund der Aussparung 16 in beide Richtungen verschoben werden, so daß der Befestigungsabschnitt 14 in die Randstellung verstellt werden kann, wodurch eine Justierung der Befestigungsvorrichtungen 10 zueinander möglich ist. Beim Verschieben werden die gegenüberliegenden Vorsprünge 18 dabei durch Verformen überglitten. Wenn sich der Befestigungsabschnitt 14 in der gewählten Stellung befindet, sorgen die Vorsprünge 18 dafür, daß das T-förmige Ende 20 des Befestigungsabschnitts 14 sicher gehalten wird.

## Patentansprüche

1. Befestigungsvorrichtung für ein Kabel, mit einer Schiene (12), die eine Aussparung (16) aufweist, und einem Befestigungsabschnitt (14), der sich durch die Aussparung (16) erstreckt und beweglich, aber unverlierbar in dieser angeordnet ist, wobei sowohl die Schiene (12) als auch der Befestigungsabschnitt (14) einstückig ausgebildet sind, **dadurch gekennzeichnet, dass** die Befestigungsvorrichtung (10) so im 1-Zyklus-Spritzgußverfahren hergestellt ist, daß das erste Element zwar in dem zweiten Element beweglich ist, jedoch unlösbar, d.h. unverlierbar, mit diesem verbunden ist.

2. Befestigungsvorrichtung nach Anspruch 1, **dadurch gekennzeichnet, daß** die Schiene (12) rinnenförmig ausgebildet ist.

3. Befestigungsvorrichtung nach einem der vorhergehenden Ansprüche, **dadurch gekennzeichnet, daß** Vorsprünge (18) in der Aussparung (16) vorgesehen sind, wobei jeweils zwei Vorsprünge (18) gegenüberliegend angeordnet sind.

4. Befestigungsvorrichtung nach einem der vorhergehenden Ansprüche, **dadurch gekennzeichnet, daß** ein Ende des Befestigungsabschnitts (14), das sich durch die Aussparung (16) erstreckt, T-förmig ausgebildet ist.

5. Befestigungsvorrichtung nach einem der vorhergehenden Ansprüche, **dadurch gekennzeichnet, daß** der Befestigungsabschnitt (14) einen Federteller (24) aufweist.

6. Befestigungsvorrichtung nach einem der vorhergehenden Ansprüche, **dadurch gekennzeichnet, daß** der Befestigungsabschnitt (14) an dem von der Schiene (12) abgewandten Ende (26) tannenzapfenförmig ausgebildet ist.

## Claims

1. An attachment device for a cable, comprising a rail (12) which has a recess (16), and an attachment section (14) which extends through the recess (16) and is movably, but captively arranged therein, both the rail (12) and the attachment section (14) being designed as one part, **characterised in that** the attachment device (10) is produced using the 1-cycle injection moulding method such that the first element is movable in the second element, yet is connected to the latter non-detachably, i.e. captively.

2. The attachment device according to claim 1, **characterised in that** the rail (12) is in the form of a groove.

3. The attachment device according to either of the preceding claims, **characterised in that** projections (18) are provided in the recess (16), two projections (18) respectively being arranged opposite one another.

4. The attachment device according to any of the preceding claims, **characterised in that** one end of the attachment section (14), which extends through the recess (16), is designed in the shape of a T.

5. The attachment device according to any of the preceding claims, **characterised in that** the attachment section (14) has a spring collar (24).

6. The attachment device according to any of the preceding claims, **characterised in that** at the end (26) facing away from the rail (12), the attachment section (14) is designed in the shape of a fir cone.

## Revendications

1. Dispositif de fixation pour un câble, comportant un rail (12) qui présente un évidement (16), et un tronçon de fixation (14) qui s'étend à travers l'évidement (16) et qui est agencé mobile mais imperdable dans celui-ci, tant le rail (12) que le tronçon de fixation (14) étant réalisés d'un seul tenant, **caractérisé en ce que** le dispositif de fixation (10) est réalisé en procédé de moulage par injection en 1 cycle de telle sorte que le premier élément est certes mobile dans le deuxième élément, mais relié à celui-ci de manière indétachable, c'est-à-dire imperdable.

2. Dispositif de fixation selon la revendication 1, **caractérisé en ce que** le rail (12) est réalisé en forme de cunette.

3. Dispositif de fixation selon l'une quelconque des revendications précédentes, **caractérisé en ce que** des saillies (18) sont prévues dans l'évidement (16), deux saillies (18) étant respectivement agencées l'une en face de l'autre.

4. Dispositif de fixation selon l'une quelconque des revendications précédentes, **caractérisé en ce qu'**une extrémité du tronçon de fixation (14), qui s'étend à travers l'évidement (16), est réalisée en forme de T.

5. Dispositif de fixation selon l'une quelconque des revendications précédentes, **caractérisé en ce que** le tronçon de fixation (14) présente une coupelle de ressort (24).

6. Dispositif de fixation selon l'une quelconque des revendications précédentes, **caractérisé en ce que** le tronçon de fixation (14) est réalisé en forme de cône de sapin à l'extrémité (26) détournée du rail (12).
